# EUROPEAN PATENT APPLICATION

(11) **EP 4 787 615 A1**
(43) Date of publication of application: **05.08.2026**
(21) Application number: 24870648.3
(22) Date of filing: 23.09.2024
(51) Int. Cl.: H01M 50/682, H01M 50/244, H01M 10/613, H01M 10/6568, H01M 50/317, H01M 50/30, H01M 50/471, H01M 50/249

(54) **TRAY ASSEMBLY, BATTERY PACK, ELECTRIC DEVICE, AND VEHICLE**

(30) Priority: 25.09.2023 CN 202311250536; 25.09.2023 CN 202311266485
(71) Applicant: BYD Company Limited, Shenzhen, Guangdong 518118 (CN)
(72) Inventor: YANG, Jiahui, Shenzhen, Guangdong 518118 (CN); FU, Leiqiang, Shenzhen, Guangdong 518118 (CN); KANG, Weiqing, Shenzhen, Guangdong 518118 (CN); CAO, Yanwen, Shenzhen, Guangdong 518118 (CN)
(74) Representative: Mathys & Squire
(86) International application number: PCT/CN2024/120362
(87) International publication number: WO 2025/067104

(57) **Abstract**

A tray assembly, a battery pack, an electric device, and a vehicle. The tray assembly comprises: a tray, the tray having an accommodating cavity, and the accommodating cavity being used for accommodating a battery; an explosion-proof valve, the explosion-proof valve being arranged on the tray and used for guiding high-temperature gas in the tray to the outside; and a cover body, the cover body covering the explosion-proof valve, air holes being formed in the cover body, and the air holes being used for changing the exhaust direction, so as to enable the discharged high-temperature gas to clear the tray and/or a safety device on a vehicle body, thereby improving safety.

## Description

### CROSS-REFERENCE TO RELATED APPLICATIONS

The present disclosure claims priority to Chinese Patent Application No. 202311266485.4 filed on September 25, 2023, entitled "TRAY ASSEMBLY, BATTERY PACK, ELECTRIC DEVICE, AND VEHICLE", and priority to Chinese Patent Application No. 202311250536.4 filed on September 25, 2023, entitled "BATTERY BOX, BATTERY PACK AND ELECTRIC EQUIPMENT", both of which are filed by BYD COMPANY LIMITED, and are incorporated herein by reference in their entirety.

### FIELD

The present disclosure relates to the field of battery technologies, and in particular, to a tray assembly, a battery pack, an electric device, and a vehicle.

### BACKGROUND

At present, the use of a battery pack as a power module in a vehicle is widely applied. Correspondingly, the battery pack is required to have a long service life and high safety performance to meet the demands of contemporary consumers for electric vehicles.

In the related art, due to an unreasonable structural design of the battery pack, the battery pack poses safety risks.

### SUMMARY

The present disclosure aims to solve at least one of the technical problems in the related art to a certain extent.

Therefore, the present disclosure provides a tray assembly.

A tray assembly according to the present disclosure includes: a tray, the tray having an accommodating cavity, and the accommodating cavity being used for accommodating a battery; an explosion-proof valve, the explosion-proof valve being arranged on the tray and used for guiding high-temperature gas in the tray to the outside; and a cover body, the cover body covering the explosion-proof valve, air holes being formed in the cover body, and the air holes being used for changing an exhaust direction, so as to enable the discharged high-temperature gas to clear the tray and/or a safety device on a vehicle body.

According to the tray assembly of the embodiments of the present disclosure, by guiding the high-temperature gas through the air holes, the discharged high-temperature gas can clear the safety device, thereby improving the explosion-proof safety of the battery pack.

The present disclosure also provides a battery pack. The battery pack includes the above-mentioned tray assembly.

The present disclosure also provides an electric device. The electric device includes the above-mentioned battery pack.

The present disclosure also provides a vehicle. The vehicle includes a battery pack and a second safety device, and the battery pack includes the above-mentioned tray assembly. The second safety device is mounted on a vehicle body and arranged adjacent to the battery pack, and an opening direction of the air holes is suitable for clearing the second safety device.

Additional aspects and advantages of the present disclosure will be partially set forth in the description which follows, and in part will be obvious from the description, or may be learned by practice of the present disclosure.

### BRIEF DESCRIPTION OF THE DRAWINGS

FIG. 1 is a partial schematic view of a tray assembly according to an embodiment of the present disclosure;
FIG. 2 is an exploded view of the tray assembly according to an embodiment of the present disclosure;
FIG. 3 is a structural schematic view of a cover body according to an embodiment of the present disclosure;
FIG. 4 is a schematic view showing the cooperation of the tray assembly and a second safety device according to an embodiment of the present disclosure;
FIG. 5 is a front view of a tray assembly according to one embodiment of the present disclosure;
FIG. 6 is a side view of the tray assembly according to one embodiment of the present disclosure;
FIG. 7 is a structural schematic view of a fixing block in the tray assembly according to one embodiment of the present disclosure;
FIG. 8 is a structural schematic view of a fixing hole in the tray assembly according to one embodiment of the present disclosure;
FIG. 9 is a top view of the tray assembly according to one embodiment of the present disclosure; and
FIG. 10 is a cross-sectional view taken along line A-A in FIG. 5.

### DETAILED DESCRIPTION

Embodiments of the present disclosure will be described in detail below with reference to the drawings, in which the same or similar reference numerals indicate the same or similar elements or elements having the same or similar functions throughout. The embodiments described with reference to the drawings are exemplary, intended to explain the present disclosure, and will not be construed as limiting the present disclosure.

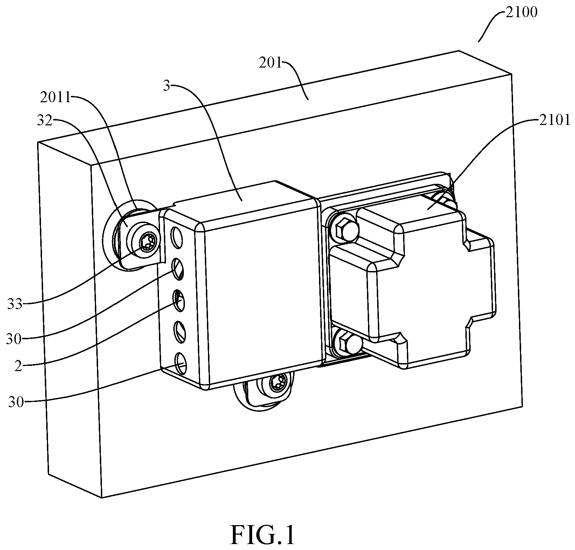

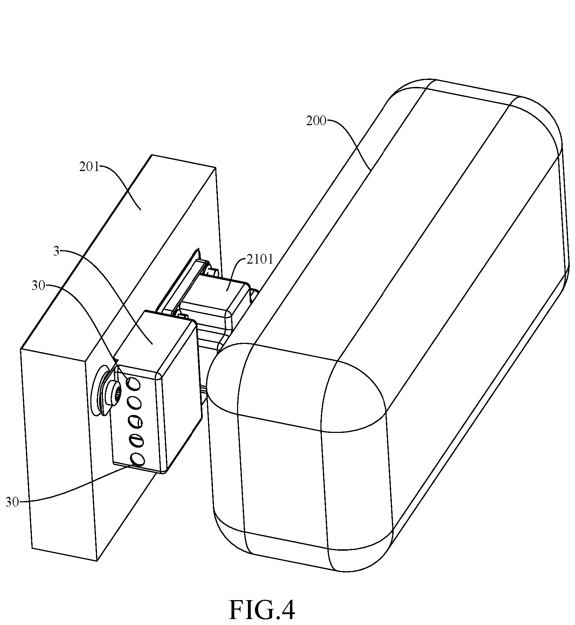

First, it will be noted that the present disclosure is filed on the basis of the above-mentioned priority documents, and therefore, the terms in the above-mentioned priority documents have been unified. Herein, the "tray assembly" in the priority document "202311266485.4" and the "battery box" in the priority document "202311250536.4" refer to the same component and are uniformly named "tray assembly"; the "tray" in the priority document "202311266485.4" and the "box body" in the priority document "202311250536.4" refer to the same component and are uniformly named "tray"; the "accommodating cavity" in the priority document "202311266485.4" and the "cavity" in the priority document "202311250536.4" refer to the same component and are uniformly named "accommodating cavity". Hereinafter, a tray assembly 2100 according to an embodiment of the present disclosure will be described with reference to FIGS. 1 to 4. The tray assembly 2100 is applied to a battery pack and is used for carrying batteries.

The tray assembly 2100 according to the present disclosure includes: a tray 201, an explosion-proof valve 2, and a cover body 3. The tray 201 has an accommodating cavity, and the accommodating cavity is used for accommodating a battery. The explosion-proof valve 2 is arranged on the tray 201, and the explosion-proof valve 2 is used for guiding high-temperature gas in the tray 201 to the outside, so as to prevent excessive internal pressure or an excessively high temperature of the battery pack.

Herein, an air inlet 21 of the explosion-proof valve 2 is in communication with the accommodating cavity, an air outlet 22 of the explosion-proof valve 2 is in communication with the outside of the tray 201, and the cover body 3 covers the explosion-proof valve 2, so as to protect the explosion-proof valve 2 through the cover body 3.

The cover body 3 is formed with air holes 30, and the air holes 30 are used for changing an exhaust direction, so as to enable the discharged high-temperature gas to clear the tray 201 and/or a safety device on a vehicle body.

Herein, the safety device may include a first safety device 2101 arranged on the tray 201 and a second safety device 2200 arranged on the vehicle body. The first safety device 2101 may be an electrical component arranged on the tray 201, such as a connection port, etc., and the second safety device 2200 may be a component arranged on the vehicle body, such as a wire harness, a fuel tank, etc. Safety devices are prone to causing high-temperature safety hazards when exposed to high temperatures. If the high-temperature gas is discharged toward the safety device, it will cause the temperature of the safety device to rise, thereby causing a high-temperature safety hazard.

When thermal runaway occurs in the battery pack, high-temperature gas will be generated inside the battery pack (i.e., inside the accommodating cavity of the tray 201), and the high-temperature gas can be discharged to the outside of the battery pack through the explosion-proof valve 2 to prevent an excessive internal pressure of the battery pack. The cover body 3 covers the explosion-proof valve 2, the high-temperature gas discharged through the explosion-proof valve 2 is inside the cover body 3 and is discharged outward through the air holes 30.

Herein, the discharge direction of the high-temperature gas is guided by the air holes 30, so that the high-temperature gas clears the first safety device 2101 on the tray 201 and the second safety device 2200 on the vehicle body, preventing the high-temperature gas from affecting the first safety device 2101 and the second safety device 2200, thereby improving the explosion-proof performance of the battery pack.

The first safety device 2101 is arranged on the tray assembly 2100. When thermal runaway occurs in the battery pack, the high-temperature gas is discharged outward through the explosion-proof valve 2, and the high-temperature gas discharged outward through the explosion-proof valve 2 may damage surrounding structural components, thereby causing a safety accident.

When the battery pack is applied to a vehicle, the battery pack is mounted to the vehicle body, and the second safety device 2200 is arranged on the vehicle body, and is arranged adjacent to the battery pack. When the battery pack discharges high-temperature gas outward under a thermal runaway condition, the high-temperature gas may cause damage to the second safety device 2200, posing a safety risk.

In the present disclosure, by guiding the high-temperature gas through the air holes 30, the discharged high-temperature gas can clear the first safety device 2101 and the second safety device 2200, thereby improving the explosion-proof safety of the battery pack.

In some embodiments of the present disclosure, the cover body 3 is in clearance fit with the explosion-proof valve 2. Herein, the cover body 3 is in clearance fit with the explosion-proof valve 2, the cover body 3 and the explosion-proof valve 2 are independent of each other and are respectively connected to the tray 201, and the clearance can provide a space for gas flow, so that the gas discharged through the air outlet 22 can flow to the air holes 30 and be discharged outward through the air holes 30.

The cover body 3 is arranged on the outside of the explosion-proof valve 2 and the cover body 3 covers the explosion-proof valve 2, so as to protect the explosion-proof valve 2, prevent pollutants in the operating environment of the battery pack from contaminating the explosion-proof valve 2, and ensure the functionality and reliability of the explosion-proof valve 2. Herein, the shielding space defined by the cover body 3 remains in communication with the air outlet 22, the gas discharged through the air outlet 22 can flow into the interior of the cover body 3, and be discharged outward through the air holes 30 of the cover body 3. The air holes 30 have a guiding effect on the discharge direction of the gas, enabling directional gas discharge, thereby improving the explosion-proof effect of the tray assembly 2100.

In the present disclosure, the explosion-proof valve 2 and the cover body 3 are respectively fixed on the tray 201, thereby reducing the probability of protection failure of the protective cover. That is, during the assembly process, after fixing the explosion-proof valve 2 on the tray 201, the cover body 3 is then placed over the explosion-proof valve 2 and the cover body 3 is fixedly connected to the tray 201. By arranging the explosion-proof valve 2 and the cover body 3 separately and assembling them respectively using the tray 201 as a base, the cover body 3 will not fail functionally due to the failure of the explosion-proof valve 2, resulting in high reliability and safety.

In the related art, the protective cover of the explosion-proof valve is directly arranged on the explosion-proof valve. Affected by the volume of the explosion-proof valve, the connection strength between the protective cover and the explosion-proof valve is relatively weak, and the connection strength between the protective cover and the explosion-proof valve cannot be guaranteed. If a large amount of gas is discharged from the explosion-proof valve, there is a risk of the protective cover detaching from the explosion-proof valve. At the same time, if the explosion-proof valve fails, it needs to be replaced together with the cover body, resulting in increased maintenance costs of the battery pack.

In the present disclosure, the explosion-proof valve 2 and the cover body 3 are separately arranged and respectively fixed on the tray 201, thereby improving the impact resistance of the cover body 3 and reducing the probability of protection failure. The cover body 3 will not fail functionally due to the failure of the explosion-proof valve 2. At the same time, if the explosion-proof valve 2 fails, the cover body 3 can be removed, the explosion-proof valve 2 can be replaced, and the cover body 3 can be reused, reducing the maintenance cost of the battery pack.

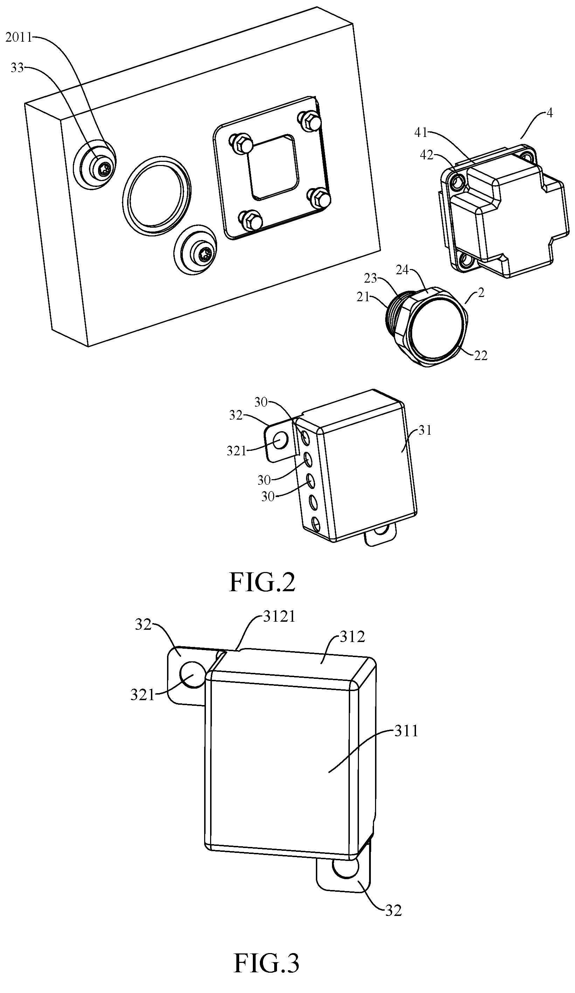

Referring to FIG. 3, the gas inside the cover body 3 can be discharged outward through the air holes 30. The air holes 30 have a guiding effect on the discharge direction of the gas, and compared with the prior art in which the exhaust direction is restricted by a ball, the safety factor is higher. In the present disclosure, the air holes 30 are opened in the cover body 3, and the gas is guided through the air holes 30. The way in which the air holes 30 guide the gas has higher mechanical reliability and durability compared to the way in which the ball restricts the exhaust direction. The aging or dysfunction of the ball may change the exhaust direction, causing greater failure and risk.

According to the tray assembly 2100 of the embodiment of the present disclosure, the explosion-proof valve 2 and the cover body 3 are respectively arranged on the tray 201, thereby improving the impact resistance of the cover body 3 and reducing the probability of protection failure. The cover body 3 will not fail functionally due to the failure of the explosion-proof valve 2. At the same time, the discharge direction of the gas discharged from the explosion-proof valve 2 is restricted by the air holes 30 on the cover body 3, improving the explosion-proof effect of the tray assembly 2100.

In some embodiments of the present disclosure, the first safety device 2101 is arranged on the tray 201 and the first safety device 2101 is arranged adjacent to the explosion-proof valve 2, and the air holes 30 are arranged to clear the first safety device 2101, so as to prevent the high-temperature gas discharged from the explosion-proof valve 2 from causing damage to the first safety device 2101, thereby improving the safety of the battery pack.

Herein, the first safety device 2101 may be configured as a lowvoltage plug interface, a high-voltage plug interface, or other structures of the battery pack.

As shown in FIG. 1, in some embodiments of the present disclosure, the tray assembly 2100 further includes a mounting seat 4. The mounting seat 4 is used for mounting the first safety device 2101, and the mounting seat 4 is mounted on the tray 201 and arranged adjacent to the explosion-proof valve 2. An opening direction of the air holes 30 is arranged to clear the mounting seat 4, so as to guide the gas through the air holes 30 away from the mounting seat 4 and the first safety device 2101 arranged on the mounting seat 4, thereby improving the safety of the tray assembly 2100.

The mounting seat 4 is used for mounting and arranging the first safety device 2101, so as to form port structures such as a discharge port and a charging port on the tray 201, meeting the charging and discharging usage requirements of the battery pack. Referring to FIG. 1, since the connection port of the battery pack is arranged adjacent to the explosion-proof valve 2, the explosion-proof valve 2 is suitable for discharging the high-temperature gas inside the battery pack when thermal runaway occurs in the battery pack, and the air holes 30 are used for restricting the exhaust direction. The opening direction of the air holes 30 is arranged to clear the mounting seat 4, which can prevent the high-temperature gas from being discharged toward the connection port, prevent the high-temperature gas from causing damage to the first safety device 2101 at the connection port, and improve the safety of the tray assembly 2100.

FIG. 1 only shows a part of the tray 201, which is a part of a side beam and serves as a mounting carrier for the explosion-proof valve 2, the cover body 3, and the mounting seat 4. The explosion-proof valve 2 communicates with the accommodating cavity through the side beam, and the electrical components at the mounting seat 4 can be electrically connected to electrical equipment such as the battery inside the battery pack.

In some embodiments of the present disclosure, the cover body 3 includes a cover main body 31 and a mounting portion 32. The cover main body 31 has a cavity, an open end of the cavity faces the tray 201 side, and the air holes 30 are formed in the cover main body 31. The mounting portion 32 is arranged at the open end of the cover main body 31 and is used for connecting to the tray 201.

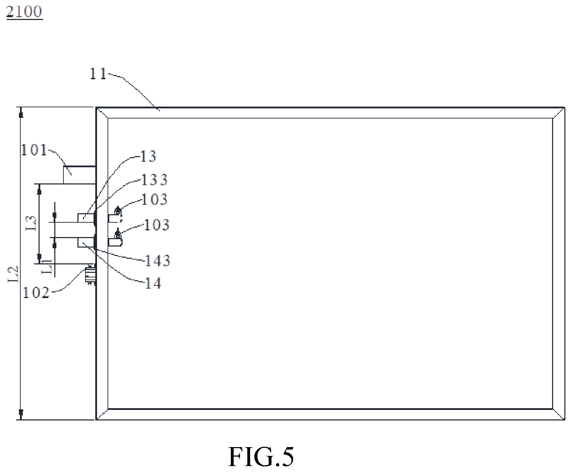

Referring to FIGS. 2 and 5, the cover main body 31 is used for covering the air outlet 22 of the explosion-proof valve 2, so as to prevent the air outlet 22 of the explosion-proof valve 2 from being exposed and contaminated, reduce the risk of the explosion-proof valve 2 failing due to contamination by pollutants, and provide good protection for the explosion-proof valve 2. Moreover, the air holes 30 are formed in the cover main body 31, and the gas discharged through the air outlet 22 into the cover main body 31 can be discharged outward through the air holes 30. At the same time, the cover main body 31 can be assembled to the tray 201 via the mounting portion 32, achieving a fixed connection between the cover body 3 and the tray 201.

In some embodiments of the present disclosure, the cover main body 31 includes: a top wall 311 and a side wall 312. The top wall 311 is opposite to and spaced apart from the air outlet 22. The side wall 312 is arranged around the top wall 311, and extends from the top wall 311 toward the tray 201 side to form the above-mentioned cavity together with the top wall 311, and the air holes 30 are formed in the side wall 312.

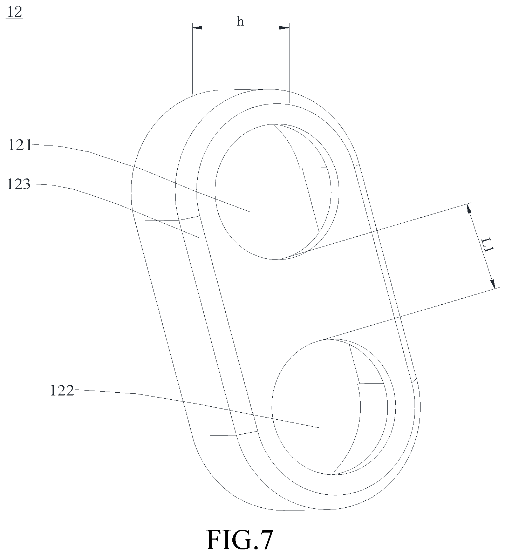

Referring to FIG. 7, the air inlet 21 and the air outlet 22 are respectively disposed at two ends of the explosion-proof valve 2 in an axial direction. When the top wall 311 is arranged opposite to and spaced apart from the air outlet 22, the top wall 311 can provide a good shielding effect for the air outlet 22, prevent the air outlet 22 from being exposed, reduce the risk of the explosion-proof valve 2 being contaminated, and reserve a space for gas discharge between the top wall 311 and the explosion-proof valve 2, ensuring the gas discharge effect at the explosion-proof valve 2.

The air holes 30 are formed in the side wall 312, thereby avoiding arranging the air holes 30 directly opposite the air outlet 22, reducing the risk of pollutants entering the cavity through the air holes 30 and contaminating the air outlet 22, and improving the protection effect of the cover body 3 on the explosion-proof valve 2.

In some embodiments of the present disclosure, the cover main body 31 is configured as a hemispherical cover structure, and the air outlet 22 of the explosion-proof valve 2 is opposite to and spaced apart from an inner wall of the hemisphere, so as to ensure the exhaust effect of the explosion-proof valve 2. Herein, the mounting portion 32 is arranged at an opening of the hemisphere, so as to be connected and fitted with an outer wall surface of the tray 201, ensuring a snap-fit effect between the cover main body 31 and the tray 201.

The cover main body 31 is configured as a hollow cover structure, as long as it meets the protection requirements for covering the explosion-proof valve 2. The shape of the cover main body 31 can be designed according to requirements and is not limited to a square cover or a spherical cover.

In some embodiments of the present disclosure, the mounting portion 32 is arranged to fit against an outer wall surface of the tray 201, and the tray assembly further includes a connecting portion 33. The connecting portion 33 passes through the mounting portion 32 and is used for fixing the mounting portion 32 to the tray 201, so as to fixedly connect the cover body 3 to the tray 201.

Herein, the mounting portion 32 is configured as a mounting plate, which is arranged at the open end of the cover main body 31, such as on the side wall 312, and extends from the side wall 312 away from the cavity side.

As shown in FIGS. 2 and 3, the mounting plate is arranged on the side wall 312 and extends outward, so as to expose the mounting structure and reduce the assembly difficulty of the cover body 3.

Herein, the mounting plate is formed with a through hole 321 for the connecting portion 33 to pass through. The tray 201 is formed with a connecting structure corresponding to the through hole 321, and the connecting portion 33 is connected and fitted with the connecting structure to fix the cover body 3 to the tray 201. The connecting portion 33 may be configured as a bolt or other connecting components.

The connecting structure is configured as a mounting protrusion 2011, which is arranged protruding outward. The mounting plate is lapped and fitted with the mounting protrusion 2011. The mounting protrusion 2011 has a threaded hole, and the connecting portion 33 is configured as a bolt. The bolt can pass through the through hole 321 and be threadedly fitted with the threaded hole, so as to clamp and fix the mounting plate between the mounting protrusion 2011 and the head of the bolt. The connection method is simple and highly reliable, and also has high connection strength, which can improve the connection reliability between the cover body 3 and the tray 201.

The configuration of the connecting portion 33 is not limited thereto; it can also be configured as a snap-fit structure (e.g., a hook, etc.). Correspondingly, a snap-fit mating structure (e.g., a slot, etc.) is correspondingly arranged at the mounting position of the tray 201 (e.g., at the side beam).

In some embodiments of the present disclosure, a notch 3121 is arranged on the side wall 312 of the cover body 3. The notch 3121 is recessed from an edge of the side wall 312 at the open end side toward a direction away from the tray 201, so as to define a space for transitioning the mounting plate at the notch 3121. While ensuring the fitting between the mounting plate and the mounting protrusion 2011, the open end of the cover main body 31 can be arranged to fit against the mounting surface of the tray 201 (i.e., the outer wall surface of the side beam), preventing a large amount of high-temperature gas from being discharged from the gap between the cover main body 31 and the wall surface at the mounting position of the tray 201, and improving the fitting effect between the cover main body 31 and the tray 201 and the covering effect of the cover main body 31 on the explosion-proof valve 2.

In some embodiments of the present disclosure, there are a plurality of mounting plates, and the plurality of the mounting plates are all arranged on a circumferential outer side of the cover main body 31, so as to improve the connection reliability between the cover body 3 and the tray 201 by arranging the plurality of connection positions. When the connection method is the same, the greater the number of connection structures, the higher the connection strength between the cover body 3 and the tray 201, thereby improving the impact resistance of the cover body 3.

Referring to FIG. 1, there are two mounting plates. One of the two mounting plates is arranged on a side of the cover main body 31 away from the mounting seat 4, and the other of the two mounting plates is arranged on a lower side of the cover main body 31. Correspondingly, a notch 3121 structure is arranged at a position of the cover main body 31 adjacent to the mounting plate, and the arrangement of the notch 3121 facilitates the fitting of the mounting plate with the mounting protrusion.

When the battery undergoes thermal runaway, part of the high-temperature gas inside the cover body 3 can be discharged through the notch 3121. Therefore, the arrangement position of the notch 3121 needs to be designed to clear the mounting seat 4, so as to prevent the high-temperature gas discharged from the notch 3121 from being directed toward the mounting seat 4 or electrical equipment around the battery pack.

As shown in FIG. 1, in some embodiments of the present disclosure, the air holes 30 are formed in the side wall 312 of the cover main body 31 that faces away from the mounting seat 4.

Herein, the cover main body 31 is configured in a rectangular parallelepiped shape, and the air holes 30 are formed in the side wall 312 of the cover main body 31 away from the mounting seat 4, so as to directionally exhaust air to the side away from the mounting seat 4. Of course, the air holes 30 can also be formed in the upper side wall 312 or the lower side wall 312 of the cover main body 31, so as to prevent discharging high-temperature gas toward the mounting seat 4 side. The opening direction of the air holes 30 needs to be designed in conjunction with the surrounding components and equipment to prevent secondary damage caused by the discharged high-temperature steam.

Herein, the shape of the cover main body 31 is not limited to a rectangular parallelepiped shape; it can also be cylindrical, prismatic, etc.

As shown in FIG. 2, in some embodiments of the present disclosure, the mounting seat 4 includes: a connecting plate 41 and a fixing seat 42. The connecting plate 41 is connected to the tray 201. The fixing seat 42 is arranged on a side of the connecting plate 41 facing away from the tray 201, and has a fixing portion. The fixing portion is used for fixing the first safety device, and the first safety device can be electrically connected to the battery.

The battery pack needs to be equipped with ports to achieve electrical connection with other devices and to realize the charging and discharging functions of the battery pack. The connecting plate 41 is used for connecting to the tray 201 to fix the mounting seat 4 to the tray 201. The fixing seat 42 is arranged on a surface of the connecting plate 41 facing away from the tray 201 and has a fixing structure. The fixing structure is used for fixing the first safety device, so as to serve as a connection port of the battery pack at the mounting seat 4.

In some embodiments of the present disclosure, the connecting plate 41 can be fixedly connected to the tray 201 via a threaded connection component, and the connection method is simple and highly reliable.

In other embodiments of the present disclosure, the connecting plate 41 can also be connected to the tray 201 by means of plugging and snap-fitting.

In some embodiments of the present disclosure, a peripheral wall of the explosion-proof valve 2 is arranged with a threaded portion 23, and the threaded portion 23 is threadedly connected to the tray 201, so as to mount the explosion-proof valve 2 to the tray 201. Herein, the tray 201 also has a threaded structure, and the threaded structure is adapted to the threaded portion 23.

The explosion-proof valve 2 includes a housing, the threaded portion 23 is on the housing, and an end of the housing where the air outlet 22 is located is arranged with a head 24. The head 24 is arranged in a polygonal shape, and its shape and size can be adapted to a wrench. Therefore, the explosion-proof valve 2 can be assembled to the tray 201 using a wrench, reducing the assembly difficulty of the explosion-proof valve 2.

In some embodiments of the present disclosure, the explosion-proof valve 2 is configured to open and relieve pressure when the internal pressure of the battery pack increases within a range of 5 KPa to 40 KPa, so as to prevent the battery pack from exploding due to abnormal internal pressure and ensure the safety of the battery pack.

In some embodiments of the present disclosure, the cover body 3 is configured as a metal protective cover. The metal protective cover has high structural strength and good impact resistance and high-temperature resistance, for example, it can maintain function without failure for a period of time (e.g., 6 minutes) at least above 200°C.

According to the battery pack of the embodiment of the present disclosure, the battery pack includes the above-mentioned tray assembly 2100. The tray assembly 2100 includes the explosion-proof valve 2, the cover body 3, and the mounting seat 4. By directly connecting the cover body 3 to the tray 201, the assembly reliability of the cover body 3 is improved, and protection failure of the cover body 3 is prevented. At the same time, the air holes 30 formed in the cover body 3 can restrict the discharge direction of the gas, thereby achieving directional exhaust, preventing high-temperature gas from being discharged toward the connection port of the battery pack, and improving the safety of the battery pack.

According to the electric device of the embodiment of the present disclosure, the electric device includes the above-mentioned battery pack, and the battery pack has high safety. Herein, the electric device may be an electric vehicle or the like.

According to the vehicle of the embodiment of the present disclosure, the vehicle includes the second safety device 2200 and the above-mentioned battery pack. The second safety device 2200 is mounted on the vehicle body and arranged adjacent to the battery pack, and the opening direction of the air holes of the explosion-proof valve 2 is suitable for clearing the second safety device 2200, so as to improve the safety of the vehicle.

The vehicle includes the second safety device 2200 and the battery pack. When thermal runaway occurs in the battery pack, a large amount of high-temperature gas will be discharged. The gas is discharged outward through the explosion-proof valve 2. Due to the structural limitations of the vehicle body, the second safety device 2200 in the vehicle is usually arranged adjacent to the battery pack. To improve the safety of the battery pack during exhaust, the air holes 30 can be arranged to clear the second safety device 2200, so as to prevent the high-temperature gas discharged through the explosion-proof valve 2 from being directed toward the second safety device 2200 and causing damage to the second safety device 2200.

Herein, the vehicle may be a new energy vehicle (e.g., an electric vehicle) or a hybrid vehicle (e.g., a gasoline-electric hybrid vehicle).

When the battery pack is applied to an electric device (or vehicle), the opening direction of the air holes 30 needs to clear safety-related components around the battery pack, such as the first safety device and the second safety device, so as to prevent secondary damage caused by the high-temperature gas during discharge and improve the safety of the electric device.

In the related art, when the inlet nozzle and the outlet nozzle on the tray assembly are arranged on the same side, the side wall of the conventional tray assembly has an inlet nozzle mounting hole and an outlet nozzle mounting hole located at the same height. Since the inlet nozzle mounting hole and the outlet nozzle mounting hole have the same height and the same shape and size, when the inlet nozzle and the outlet nozzle are assembled on the tray assembly, assembly errors may occur for the inlet nozzle and the outlet nozzle, i.e., the inlet nozzle is assembled into the outlet nozzle mounting hole, and the outlet nozzle is assembled into the inlet nozzle mounting hole, thereby affecting the reliability and safety of the tray assembly.

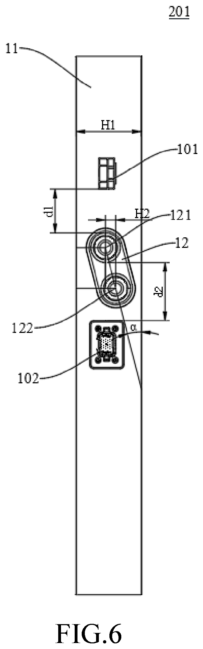

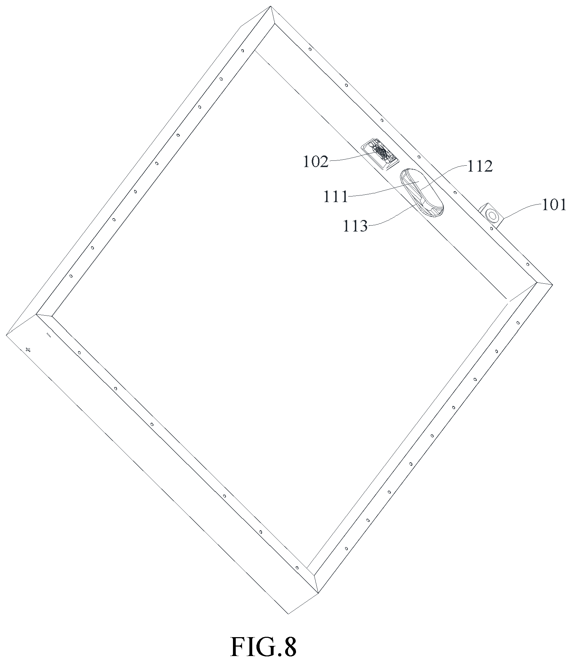

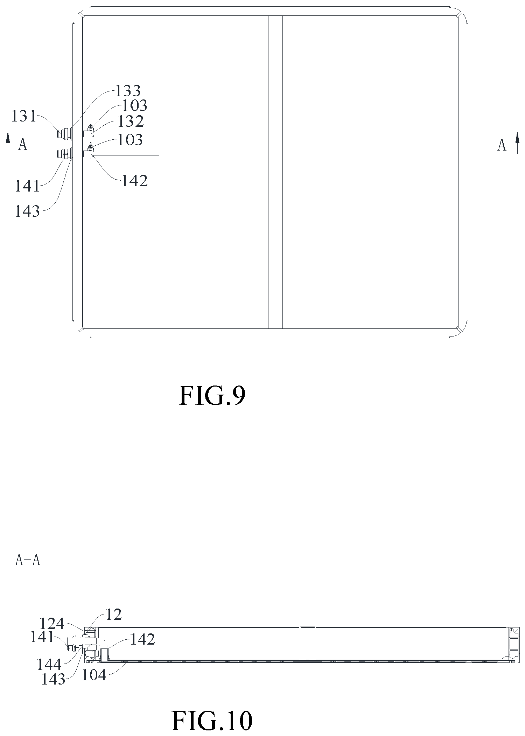

Hereinafter, a tray assembly 2100 according to an embodiment of the present disclosure will be described with reference to FIGS. 5 to 10.

The tray assembly 2100 according to the present disclosure includes: a tray 201, an inlet nozzle 13, and an outlet nozzle 14. The tray 201 has an accommodating cavity for accommodating a battery. The inlet nozzle 13 and the outlet nozzle 14 are respectively arranged on a side wall of the tray 201. A minimum distance between the inlet nozzle 13 and a bottom edge of the side wall is greater than or less than a minimum distance between the outlet nozzle 14 and the bottom edge of the side wall. A height of the tray 201 is H1, and a distance in a height direction of the tray 201 between a center of the inlet nozzle 13 and a center of the outlet nozzle 14 is H2 and satisfies: 0 < H2/H1 ≤ 1/2.

As shown in FIG. 5, the tray assembly 2100 is composed of the tray 201, the inlet nozzle 13, and the outlet nozzle 14. The tray 201 internally has the accommodating cavity, and the accommodating cavity can be used for receiving the battery. The inlet nozzle and the outlet nozzle 14 are simultaneously arranged on one side wall of the tray 201. The distance from the inlet nozzle 13 to the bottom edge of the side wall of the tray 201 is greater than or less than the distance from the outlet nozzle 14 to the bottom edge of the side wall of the tray 201. A certain height difference exists between the inlet nozzle 13 and the outlet nozzle 14, and the arrangement position of the inlet nozzle 13 is higher or lower than the arrangement position of the outlet nozzle 14. During the assembly process of the inlet nozzle 13 and the outlet nozzle 14, this provides a certain fool-proof function, can effectively prevent the inlet nozzle 13 and the outlet nozzle 14 from being reversed, and ensures the reliability and stability of the tray assembly during operation.

In some embodiments, the height of the tray 201 is H1, and a distance in a height direction of the tray 201 between a center of the outlet nozzle 14 and a center of the inlet nozzle 13 is H2. The distance from the inlet nozzle 13 to the bottom edge of the side wall of the tray 201 minus the distance from the outlet nozzle 14 to the bottom edge of the side wall of the tray 201 equals H2. When cross-sections of the inlet nozzle 13 and the outlet nozzle 14 are configured as regular shapes, H2 is a distance in the height direction between a geometric center of the inlet nozzle 13 and a geometric center of the outlet nozzle 14. In some embodiments, when the cross-sections of the inlet nozzle 13 and the outlet nozzle 14 are configured as circles, H2 is a distance between a center of the inlet nozzle circle and a center of the outlet nozzle circle. When the cross-sections of the inlet nozzle 13 and the outlet nozzle 14 are configured as regular polygons, H2 is a distance between a center of a circumscribed circle of the inlet nozzle and a center of a circumscribed circle of the outlet nozzle. When the cross-sections of the inlet nozzle 13 and the outlet nozzle 14 are configured as irregular shapes, an approximate geometric center of the inlet nozzle 13 and an approximate geometric center of the outlet nozzle 14 are selected, and H2 is a distance in the height direction between the approximate geometric center of the inlet nozzle 13 and the approximate geometric center of the outlet nozzle 14. That is, H2 may be the distance between the center of the inlet nozzle 13 and the center of the outlet nozzle 14, or H2 may also be a distance between a center of gravity of the inlet nozzle 13 and a center of gravity of the outlet nozzle 14. H2/H1 satisfies the following relational expression: 0 < H2/H1 ≤ 1/2. Units of H1 and H2 are both mm.

When H2/H1 satisfies the above proportional relationship, it can meet required assembly dimensions between the inlet nozzle 13 and the outlet nozzle 14 and the tray assembly 2100, and can also ensure that a flow rate difference between the inlet nozzle and the outlet nozzle 14 is not excessively large, while a certain height difference exists between the inlet nozzle 13 and the outlet nozzle 14, with the arrangement position of the inlet nozzle 13 being higher or lower than the arrangement position of the outlet nozzle 14. During the assembly process of the inlet nozzle 13 and the outlet nozzle 14, this provides a certain fool-proof function, can effectively prevent the inlet nozzle 13 and the outlet nozzle 14 from being reversely assembled, and ensures the reliability and stability of the tray assembly during operation.

According to the tray assembly 2100 of the present disclosure, by setting a ratio H2/H1 of the height H1 of the tray 201 to the distance H2 in the height direction of the tray 201 between the center of the inlet nozzle 13 and the center of the outlet nozzle 14 within a range of 0 < H2/H1 ≤ 1/2, it can meet the required assembly dimensions between the inlet nozzle 13 and the outlet nozzle 14 and the tray assembly, and can also ensure that the flow rate difference between the inlet nozzle 13 and the outlet nozzle 14 is not excessively large, while a certain height difference exists between the inlet nozzle 13 and the outlet nozzle 14, with the arrangement position of the inlet nozzle 13 being higher or lower than the arrangement position of the outlet nozzle 14. During the assembly process of the inlet nozzle 13 and the outlet nozzle 14, this provides a certain fool-proof function, can effectively prevent the inlet nozzle 13 and the outlet nozzle 14 from being reversely assembled, and ensures the reliability and stability of the tray assembly during operation.

According to some embodiments of the present disclosure, H1 satisfies: H1 ≤ 100 mm, and 10 mm ≤ H2 ≤ 50 mm.

In some embodiments, the height of the tray 201 is H1, and the distance in the height direction of the tray 201 between the center of the inlet nozzle 13 and the center of the outlet nozzle 14 is H2, wherein H1 is set within a range of H1 ≤ 100 mm, and H2 is set within a range of 10 mm ≤ H2 ≤ 50 mm.

When H1 and H2 are set within the ranges of H1 ≤ 100 mm and 10 mm ≤ H2 ≤ 50 mm, the required assembly dimensions for the inlet nozzle 13 and the outlet nozzle 14 can be met without increasing the size of the tray 201. While ensuring that the flow rate difference between the inlet nozzle 13 and the outlet nozzle 14 is not excessively large, a certain height difference exists between the inlet nozzle 13 and the outlet nozzle 14, with the arrangement position of the inlet nozzle 13 being higher or lower than the arrangement position of the outlet nozzle 14. During the assembly process of the inlet nozzle 13 and the outlet nozzle 14, this provides a certain fool-proof function, can effectively prevent the inlet nozzle 13 and the outlet nozzle 14 from being reversely assembled, and ensures the reliability and stability of the tray assembly during operation. A staggered arrangement of the inlet nozzle 13 and the outlet nozzle 14 in the height direction of the tray assembly can reduce a distance between the inlet nozzle 13 and the outlet nozzle 14 in a width direction of the tray assembly, so as to leave more space in the width direction for assembling other electronic components.

According to some embodiments of the present disclosure, a minimum distance between the two nozzles is L1, a width of the side wall of the tray assembly is L2, and the following is satisfied: 14 ≤ L2/L1 ≤ 21.

In some embodiments, the minimum distance between the inlet nozzle 13 and the outlet nozzle 14 is L1, and the width of the side wall of the tray 201 is set to L2, wherein L2/L1 satisfies the following relational expression: 14 ≤ L2/L1 ≤ 21. Units of L1 and L2 are both mm.

When L2/L1 satisfies the above proportional relationship, it can meet the required assembly dimensions between the inlet nozzle 13 and the outlet nozzle 14 and the tray assembly, and also leaves a certain safety distance between the inlet nozzle 13 and the outlet nozzle 14 and other components arranged on the side wall of the tray 201, effectively preventing the inlet nozzle 13 and the outlet nozzle 14 from interfering with other components on the side wall of the tray 201, thereby improving stability and safety of the battery pack during operation.

According to some embodiments of the present disclosure, L1 satisfies: 30 mm ≤ L1 ≤ 100 mm.

In some embodiments, the minimum distance between the inlet nozzle 13 and the outlet nozzle 14 is set to L1, wherein L1 is set within a range of 30 mm ≤ L1 ≤ 100 mm.

When L1 is set within the range of 30 mm ≤ L1 ≤ 100 mm, it can meet the required assembly dimensions between the inlet nozzle 13 and the outlet nozzle 14 and the tray assembly, and can also minimize an amount of the fixing block for the inlet nozzle 13 and the outlet nozzle 14, reducing manufacturing costs. At the same time, it also leaves a certain safety distance between the inlet nozzle 13 and the outlet nozzle 14 and other components arranged on both sides thereof, effectively preventing the inlet nozzle 13 and the outlet nozzle 14 from interfering with other components on the tray assembly, thereby improving stability and safety of the tray assembly 2100 during operation.

According to some embodiments of the present disclosure, L2 satisfies: 400 mm ≤ L2 ≤ 1500 mm.

In some embodiments, the width of the side wall of the tray 201 is L2, wherein L2 is set within a range of 400 mm ≤ L2 ≤ 1500 mm.

When L2 is set within the range of 400 mm ≤ L2 ≤ 1500 mm, it can meet the assembly size requirements of the inlet nozzle 13 and the outlet nozzle 14, and can also meet assembly requirements of various electric devices, and can accommodate more batteries, thereby increasing an energy density of the battery pack and improving endurance of the electric device.

According to some embodiments of the present disclosure, a first connecting member and a second connecting member are arranged on the side wall of the tray 201, and the inlet nozzle 13 and the outlet nozzle 14 are located between the first connecting member and the second connecting member. A distance between the first connecting member and the second connecting member is L3, and the following is satisfied: 0.1 ≤ L1/L3 ≤ 0.9.

The first connecting member and the second connecting member are arranged on the side wall of a certain side of the tray 201, and the inlet nozzle 13 and the outlet nozzle 14 are arranged between the first connecting member and the second connecting member.

In some embodiments, the minimum distance between the inlet nozzle 13 and the outlet nozzle 14 is set to L1, and the distance between the first connecting member and the second connecting member is L3, wherein L1/L3 satisfies the following relational expression: 0.1 ≤ L1/L3 ≤ 0.9. Units of L1 and L3 are both mm.

When L1/L3 satisfies the above proportional relationship, a certain safety distance is left between the inlet and outlet nozzles 14 and other components arranged on both sides thereof, effectively preventing the inlet and outlet nozzles 14 from interfering with other components on the tray assembly 2100, thereby improving stability and safety of the tray assembly 2100 during operation. When L1/L3 satisfies the above proportional relationship, it can meet required assembly dimensions between the inlet nozzle 13 and the outlet nozzle 14 and a battery pack liquid cooling system, and can also minimize a size of a nozzle fixing block 12, reducing material consumption and manufacturing costs.

According to some embodiments of the present disclosure, L3 satisfies: 50 mm ≤ L3 ≤ 1000 mm.

In some embodiments, the distance between the first connecting member and the second connecting member is L3, wherein L3 is set within a range of 50 mm ≤ L3 ≤ 1000 mm.

When L3 is set within the range of 50 mm ≤ L3 ≤ 1000 mm, the distance between the first connecting member and the second connecting member meets assembly dimensions of the inlet nozzle 13 and the outlet nozzle 14, and the first connecting member and the second connecting member do not interfere with the inlet nozzle 13 and the outlet nozzle 14, ensuring stability and reliability of the battery pack during operation. In addition, in some battery pack structures, other components are also arranged between the first connecting member and the second connecting member. When L3 is set within the range of 50 mm ≤ L3 ≤ 1000 mm, the other components arranged between the first connecting member and the second connecting member also do not interfere with the inlet nozzle 13 and the outlet nozzle 14, ensuring stable operation of the battery pack.

According to some embodiments of the present disclosure, the inlet nozzle 13 and the outlet nozzle 14 are configured as cylinders extending away from the side wall of the tray 201, and an angle between a line connecting an axis of the inlet nozzle 13 and an axis of the outlet nozzle 14 and a bottom surface of the tray 201 is α and satisfies: 0°< α ≤ 45°.

The inlet nozzle 13 and the outlet nozzle 14 are both configured as cylindrical structures and extend in a direction away from the side wall of the tray 201. The line connecting the axis of the inlet nozzle 13 and the axis of the outlet nozzle 14 is inclined relative to a bottom surface of the tray. The angle between the line connecting the axis of the inlet nozzle 13 and the axis of the outlet nozzle 14 and the bottom surface of the tray 201 is α, and α is set within a range of: 0°< α ≤ 45°.

In some embodiments, when 0°< α ≤ 45°, the line connecting the axis of the inlet nozzle 13 and the axis of the outlet nozzle 14 is inclined relative to the bottom surface of the tray 201, and a certain height difference exists between the arrangement positions of the inlet nozzle 13 and the outlet nozzle 14. When assembling the tray assembly, positioning of the inlet nozzle 13 and the outlet nozzle 14 can be more accurate, effectively preventing the inlet nozzle 13 and the outlet nozzle 14 from being reversely assembled, and ensuring normal operation of a liquid cooling system inside the battery pack.

According to some embodiments of the present disclosure, a minimum distance between the inlet nozzle 13 and the bottom surface of the tray 201 is greater than a minimum distance between the outlet nozzle 14 and the bottom surface of the tray 201.

In some embodiments, the minimum distance from the inlet nozzle 13 to the bottom edge of the side wall of the tray 201 is greater than the minimum distance from the outlet nozzle 14 to the bottom edge of the side wall of the tray 201, and the inlet nozzle 13 is arranged obliquely above the outlet nozzle 14. The arrangement positions of the inlet nozzle 13 and the outlet nozzle 14 are determined, allowing assembly personnel to distinguish the arrangement positions of the inlet nozzle 13 and the outlet nozzle 14 more quickly and clearly, thereby improving assembly efficiency of the inlet nozzle 13 and the outlet nozzle 14.

According to some embodiments of the present disclosure, a minimum distance between the inlet nozzle 13 and the first connecting member is less than a minimum distance between the inlet nozzle 13 and the second connecting member; and/or a minimum distance between the outlet nozzle 14 and the first connecting member is greater than a minimum distance between the outlet nozzle 14 and the second connecting member, so that a certain space exists between the inlet nozzle 13 and the first connecting member or between the outlet nozzle 14 and the second connecting member for assembling some other components, thereby making a tray assembly structure more compact and highly integrated.

According to some embodiments of the present disclosure, one of the first connecting member and the second connecting member is configured as a lifting lug 101, and the other of the first connecting member and the second connecting member is configured as an electrical connection port 102. A minimum distance between the inlet nozzle 13 and the lifting lug 101 is d1, a minimum distance between the inlet nozzle 13 and the electrical connection port 102 is d2, and the following are satisfied: d1 ≥ 40 mm, d2 ≥ 40 mm.

In some embodiments, the first connecting member may be configured as a lifting lug 101. The lifting lug 101 can be used for fixing and supporting the battery pack, ensuring that the battery pack is placed in an appropriate position, reducing shaking of the battery pack during transportation or in a vibration environment, and improving stability of the battery pack during transportation. The second connecting member may be configured as an electrical connection port 102. The tray assembly can be electrically connected to various electric devices through the electrical connection port 102. The electrical connection port 102 can provide power input, transmit current and voltage, and achieve power supply to the electric devices.

When the inlet nozzle 13 and the outlet nozzle 14 are configured as regular shapes, a distance between a tangent line, which is perpendicular to the bottom edge of the side wall of the tray 201 in a width direction and tangent to a side of the inlet nozzle 13 close to the lifting lug 101, and the lifting lug 101 is taken as d1. A distance between a tangent line, which is perpendicular to the bottom edge of the side wall of the tray 201 in the width direction and tangent to a side of the outlet nozzle 14 close to the electrical connection port 102, and the electrical connection port 102 is also taken as d2, wherein d1 is set within a range of d1 ≥ 40 mm, and d2 is set within a range of d2 ≥ 40 mm.

When the inlet nozzle 13 and the outlet nozzle 14 are configured as irregular shapes, a distance between a point on an outer surface of the inlet nozzle 13 closest to the lifting lug 101 and the lifting lug 101 is taken as d1, and a distance between a point on an outer surface of the outlet nozzle 14 closest to the electrical connection port 102 and the electrical connection port 102 is taken as d2, wherein d1 is set within a range of d1 ≥ 40 mm, and d2 is set within a range of d2 ≥ 40 mm.

When d1 and d2 are set within the above ranges, the inlet nozzle 13 and the outlet nozzle 14 can be assembled on the tray 201 more conveniently and quickly, and will not interfere with the lifting lug 101 and the electrical connection port 102, maintaining a certain safe working distance between the lifting lug 101 and the electrical connection port 102 and the inlet and outlet nozzles 14, thereby improving safety and stability of the battery pack during operation.

According to some embodiments of the present disclosure, the tray 201 includes: a frame 11 and a fixing block 12. The frame 11 is arranged around to define an accommodating cavity. One side of the frame 11 forms the side wall of the tray 201, and a fixing hole 111 extending through the side wall of the tray 201 is formed in the frame 11. The fixing block 12 is received in the fixing hole 111, and at least one end of the fixing block 12 is sealingly connected to the fixing hole 111. The fixing block 12 has a first hole 121 and a second hole 122 for mating with the inlet nozzle 13 and the outlet nozzle 14, respectively.

In some embodiments, the tray 201 is composed of the frame 11 and the fixing block 12. A first opening and a second opening are respectively formed at two ends of the frame 11 in a thickness direction of the battery pack. A liquid cooling plate 104 is arranged on one of the first opening and the second opening. The liquid cooling plate 104 can close the first opening or the second opening. The frame is arranged around an outer periphery of the liquid cooling plate 104. The liquid cooling plate 104 and the frame 11 together define the accommodating cavity. Part of the inlet nozzle 13 and part of the outlet nozzle 14 are received in the accommodating cavity, and one end of the inlet nozzle 13 and one end of the outlet nozzle 14 are respectively sealingly connected to the liquid cooling plate 104, thereby achieving flow of a cooling medium within the battery pack, and controlling an internal temperature of the battery pack within a safe range through the cooling medium, improving safety of the battery pack.

The frame 11 may be configured as a rectangle. The side wall of the tray 201 forms one side frame of the rectangular frame 11. The fixing hole 111 is formed in the side wall of the tray 201. The fixing hole 111 is inclined relative to a bottom surface of the tray assembly. The fixing hole 111 extends through the side wall of the tray 201 in a width direction of the tray assembly. The fixing hole 111 and the first connecting member and the second connecting member are arranged on a same side frame, and the fixing hole 111 is arranged between the first connecting member and the second connecting member. A certain receiving space is defined in the fixing hole 111, and the receiving space can be used for receiving the fixing block 12. At least part of an outer periphery of the fixing block 12 can be sealingly connected to the fixing hole 111. On one hand, this can restrict movement of the fixing block 12 within the fixing hole 111, improving stability and reliability of the fixing block 12 within the fixing hole 111. On the other hand, this can effectively prevent internal gas of the battery pack from leaking from a connection between the fixing block 12 and the fixing hole 111, ensuring safety of the battery pack during operation.

The fixing block 12 has the first hole 121 and the second hole 122 spaced apart. Centers of the first hole 121 and the second hole 122 are on a same straight line. The other ends of the inlet nozzle 13 and the outlet nozzle 14 are respectively arranged in the first hole 121 and the second hole 122 and extend away from the frame. Since the fixing block 12 is arranged in the fixing hole 111, and the fixing hole 111 is inclined relative to the bottom surface of the tray 201, when the fixing block 12 is located in the fixing hole 111, a connecting line between the first hole 121 and the second hole 122 is inclined relative to the bottom surface of the tray 201, which can effectively prevent the inlet nozzle 13 and the outlet nozzle 14 from being reversely assembled, ensuring normal operation of the liquid cooling system inside the battery pack.

According to some embodiments of the present disclosure, the first hole 121 and the second hole 122 are configured as circular holes, and an angle between a line connecting a center of the first hole 121 and a center of the second hole 122 and a bottom surface of the tray 201 is α and satisfies: 0°< α ≤ 45°.

The inlet nozzle 13 and the outlet nozzle 14 are respectively arranged in the first hole 121 and the second hole 122. The center of the inlet nozzle 13 coincides with the center of the first hole 121, and the center of the outlet nozzle 14 coincides with the center of the second hole 122. A line connecting the center of the inlet nozzle 13 and the center of the outlet nozzle 14 is the line connecting the center of the first hole 121 and the center of the second hole 122.

In some embodiments, when 0°< α ≤ 45°, the line connecting the inlet nozzle 13 and the outlet nozzle 14 is inclined relative to the bottom surface of the tray 201, and a certain height difference exists between arrangement positions of the inlet nozzle 13 and the outlet nozzle 14. When assembling the tray assembly 2100, positioning of the inlet nozzle 13 and the outlet nozzle 14 can be more accurate, effectively preventing the inlet nozzle 13 and the outlet nozzle 14 from being reversely assembled, ensuring normal operation of a liquid cooling system inside the battery pack. At the same time, positions of the fixing block 12 in a thickness direction of the battery pack are relatively staggered, which can reduce a distance of the fixing block 12 in a width direction of the battery pack, so as to leave more space in a width direction of the frame 11 for assembling other electronic components.

In other embodiments, when α = 0°, the line connecting the center of the first hole 121 and the center of the second hole 122 is arranged parallel to the bottom surface of the tray 201, leaving a certain safety distance between the fixing block 12 and the bottom surface of the tray 201 and between the fixing block 12 and a top surface of the tray 201. When assembling the inlet nozzle 13 and the outlet nozzle 14, this effectively prevents the inlet nozzle 13 and the outlet nozzle 14 from interfering with components on the top surface or the bottom surface of the tray 201, ensuring stability and reliability inside the battery pack assembly, i.e., the tray assembly 2100.

According to some embodiments of the present disclosure, a cross-section of the fixing block 12 is configured to be oblong.

In some embodiments, as shown in FIG. 7, a cross-sectional area of the fixing block 12 in a length direction of the tray 201 is configured to be oblong. The oblong fixing block 12 has a first side, a second side, a third side, and a fourth side. The first side and the second side are arranged parallel to each other and extend horizontally along the length direction of the battery pack. The third side and the fourth side are respectively arranged at two ends of the first side and the second side in the length direction of the battery pack, and the third side and the fourth side may be configured as arc shapes. The oblong fixing block 12 can be placed more tightly in the fixing hole 111. Meanwhile, under a condition of equal length, width, and height, a volume of a rectangular fixing block is larger than a volume of the oblong fixing block 12. Therefore, compared with a rectangular fixing block provided in a conventional battery pack, the oblong fixing block 12 provided in the present disclosure uses less material during manufacturing, has a higher material utilization rate, and lower processing and manufacturing costs.

Furthermore, an interior of the fixing block 12 may be configured as a hollow structure. On one hand, this can reduce the manufacturing material of the fixing block 12, save materials, and lower the manufacturing cost of the tray assembly 2100. On the other hand, this reduces an overall mass of the fixing block 12. Since the fixing block 12 is arranged on the battery pack frame 11, a mass of the battery pack frame 11 is reduced, thereby reducing an overall mass of the battery pack, decreasing a load weight of a vehicle, reducing energy consumption of the vehicle, and increasing a cruising range of the vehicle.

According to some embodiments of the present disclosure, an inner end of the fixing block 12 faces the accommodating cavity. A first weld is formed between an outer periphery of the inner end of the fixing block 12 and the fixing hole 111. The first weld welds and seals the inner end of the fixing block 12 to an inner surface of the frame 11.

In some embodiments, a first welding surface 112 and a second welding surface 113 are defined in the fixing hole 111. The first welding surface 112 and the second welding surface 113 are spaced apart along an axial direction of the fixing hole 111. An end of the fixing block 12 close to the accommodating cavity direction is the inner end of the fixing block 12. The first weld is formed between the outer periphery of the inner end of the fixing block 12 and the second welding surface 113. The first weld is a seam formed by melting a welding rod and metal in a gap between the second welding surface 113 and the inner end of the fixing block 12 using high temperature of a welding heat source. After metal at the first weld cools, the inner end of the fixing block 12 is welded to a part of the inner surface of the frame 11. This welding method can form a uniform and continuous sealing layer at the connection between the fixing block 12 and the second welding surface 113. The sealing layer can close a gap between the inner end of the fixing block 12 and the inner surface of the frame 11, thereby achieving sealing between the inner end of the fixing block 12 and the inner surface of the frame 11.

In addition, welding can make the fixing block 12 and the frame 11 form an integral whole. When the battery pack is subjected to an external force, a welded connection can better share stress, prevent the fixing block 12 from falling out of the fixing hole 111, and improve stability and reliability of an overall structure of the battery pack.

According to some embodiments of the present disclosure, a first recess surrounding the outer periphery of the fixing block 12 is defined on the inner surface of the frame 11, and the first weld is formed in the first recess.

In some embodiments, a first recess recessed in a radially outward direction away from a center of the fixing hole 111 is defined on the second welding surface 113. The first recess is arranged surrounding the outer periphery of the fixing block 12. The first weld is received in the first recess, increasing a welding area of the first weld and the fixing block 12 with the fixing hole 111, and improving stability and reliability of the fixing block 12 within the frame 11. Furthermore, with the first weld received in the first recess, the first weld can be consistent with the fixing block 12 and inner surfaces of the frame 11, making the inner surface of the frame 11 smoother and more uniform, preventing the first weld from protruding toward the accommodating cavity during welding, effectively preventing the first weld from scratching other components inside the frame 11, and also reducing breeding, hiding, and accumulation of dirt, lowering difficulty of maintaining and cleaning the frame 11.

According to some embodiments of the present disclosure, an outer end of the fixing block 12 faces away from the accommodating cavity. A second weld 124 is formed between an outer periphery of the outer end of the fixing block 12 and the fixing hole 111. The second weld 124 welds and seals the outer end of the fixing block 12 to an outer surface of the frame 11.

In some embodiments, an end of the fixing block 12 away from the accommodating cavity is the outer end of the fixing block 12. The second weld 124 is formed between the outer end of the fixing block 12 and the first welding surface 112. The second weld 124 is a seam formed by melting a welding rod and metal at a gap between the first welding surface 112 and the outer end of the fixing block 12 using high temperature of the welding heat source. After metal at the second weld cools, the outer end of the fixing block 12 is welded to a part of the outer surface of the frame 11. The second weld can form a uniform and continuous sealing layer at the connection between the fixing block 12 and the first welding surface 112. The sealing layer can close a gap between the outer end of the fixing block 12 and the inner surface and outer surface of the frame 11, thereby achieving sealing between the outer end of the fixing block 12 and the outer surface of the frame 11.

In the present disclosure, the fixing block 12 is welded and sealed to the inner surface and the outer surface of the frame 11 respectively through the first weld and the second weld 124. This double-layer welding structure can, on one hand, compensate for a problem of reduced strength of the fixing block 12 when the fixing block 12 is configured as a hollow structure, improving structural stability between the frame 11 and the fixing block 12. On the other hand, a sealing connection between the fixing block 12 and the frame 11 is formed relatively simply, process quality control is easy, a risk index of sealing failure is low, and sealing performance between the fixing block 12 and the frame 11 is improved.

According to some embodiments of the present disclosure, a cross-sectional area of the outer end of the fixing block 12 gradually decreases in a direction away from the tray 201, so as to define an inclined surface 123 on the outer periphery of the outer end of the fixing block 12. An accommodation gap is defined between the inclined surface 123 of the fixing block 12 and the first welding surface 112. The second weld 124 can be received in the accommodation gap. On one hand, this can increase a welding area of the second weld 124 with the fixing block 12 and the frame 11, improving stability and reliability of the fixing block 12 within the frame 11. On the other hand, this can make the second weld 124 flush with an end face of the outer end of the fixing block 12, and the second weld 124 is consistent with outer surfaces of the fixing block 12 and the frame 11, making the outer surface of the frame 11 smoother and more uniform, improving aesthetic appearance of an overall battery pack, and also reducing breeding, hiding, and accumulation of dirt, lowering difficulty of maintaining and cleaning the frame 11.

According to some embodiments of the present disclosure, the inlet nozzle 13 includes: a first bent pipe 132 and a first insert 131. One end of the first bent pipe 132 is suitable for connecting to the liquid cooling plate 104. The first insert 131 is arranged at the other end of the first bent pipe 132, passes through the first hole 121, and is sealingly connected to the first hole 121. The outlet nozzle 14 includes: a second bent pipe 142 and a second insert 141. One end of the second bent pipe 142 is suitable for connecting to the liquid cooling plate 104. The second insert 141 is arranged at the other end of the second bent pipe 142, passes through the second hole 122, and is sealingly connected to the second hole 122.

In some embodiments, the inlet nozzle 13 is composed of the first bent pipe 132 and the first insert 131. One end of the first bent pipe 132 may be welded to the liquid cooling plate 104, and the other end of the first bent pipe 132 is welded to one end of the first insert 131. The other end of the first insert 131 passes through the first hole 121 and extends away from the first hole 121. The outer periphery of the first insert 131 is welded and sealed to at least part of an inner surface of the first hole 121, achieving a sealed connection between the inlet nozzle 13 and the fixing block 12, effectively preventing internal gas of the battery pack from leaking from a connection between the inlet nozzle 13 and the first hole 121, and improving stability of the battery pack during operation. The first bent pipe 132, the first insert 131, and the liquid cooling plate 104 are not integrally machined and formed. The first bent pipe 132 may be configured as a standard part, which can not only mass-produce the first bent pipe but also ensure quality of the first bent pipe 132, and can also reduce the manufacturing cost of the first bent pipe 132. When mass-producing the battery pack, consistency of size, shape, and connection mode of the first bent pipe 132 can also be ensured, improving production and manufacturing efficiency of the battery pack.

The outlet nozzle 14 is composed of the second bent pipe 142 and the second insert 141. One end of the second bent pipe 142 may be welded to the liquid cooling plate 104, and the other end of the second bent pipe 142 is welded to one end of the second insert 141. The other end of the second insert 141 passes through the second hole 122 and extends away from the second hole 122. The outer periphery of the second insert 141 is welded and sealed to at least part of an inner surface of the second hole 122, achieving a sealed connection between the outlet nozzle 14 and the fixing block 12, effectively preventing internal gas of the battery pack from leaking from a connection between the second insert 141 and the second hole 122, and improving stability of the battery pack during operation. The second bent pipe 142, the second insert 141, and the liquid cooling plate 104 are not integrally machined and formed. The second bent pipe 142 may be configured as a standard part, which can not only mass-produce the second bent pipe 142 but also ensure quality of the second bent pipe 142, and can also reduce the manufacturing cost of the second bent pipe 142. When mass-producing the battery pack, consistency of size, shape, and connection mode of the second bent pipe 142 can also be ensured, improving production and manufacturing efficiency of the battery pack.

According to some embodiments of the present disclosure, a first mating protrusion extending in a radial direction is arranged on an outer periphery of the first insert 131, and the first mating protrusion mates with the first hole 121. A third weld 133 surrounding the outer periphery of the first mating protrusion is formed on the outer end of the fixing block 12. The third weld 133 is suitable for sealing the first mating protrusion to the first hole 121. A second mating protrusion 144 extending in a radial direction is arranged on an outer periphery of the second insert 141, and the second mating protrusion 144 mates with the second hole 122. A fourth weld 143 surrounding an outer periphery of the second mating protrusion 144 is formed on the outer end of the fixing block 12. The fourth weld 143 is suitable for sealing the second mating protrusion 144 to the second hole 122.

In some embodiments, a first mating protrusion arranged surrounding the outer periphery of the first insert 131 is disposed on the first insert 131. The first mating protrusion extends radially on the first insert 131, and the first mating protrusion fits against an inner peripheral wall of the first hole 121. The third weld 133 is formed on the outer end of the fixing block 12. The third weld 133 welds an outer end face of the fixing block 12 together with part of a peripheral wall of the first mating protrusion, and can close a gap at a connection between the first hole 121 and the first mating protrusion, achieving sealing between the first hole 121 and the first mating portion, effectively preventing internal gas of the battery pack from leaking from a connection between the first insert 131 and the first hole 121, and improving stability of the battery pack during operation.

A second mating protrusion 144 arranged surrounding the outer periphery of the second insert 141 is disposed on the second insert 141. The second mating protrusion 144 extends radially on the second insert 141, and the second mating protrusion 144 fits against an inner peripheral wall of the second hole 122. The fourth weld 143 is formed on the outer end of the fixing block 12. The fourth weld 143 welds the outer end face of the fixing block 12 together with part of a peripheral wall of the second mating protrusion 144, and can close a gap at a connection between the second hole 122 and the second mating protrusion 144, achieving sealing between the second hole 122 and the second mating portion 144, effectively preventing internal gas of the tray assembly 2100 from leaking from a connection between the second insert 141 and the second hole 122, and improving stability of the battery pack during operation.

In addition, compared with a method in a conventional tray assembly that uses a sealing gasket and a nut to fix and seal the inlet and outlet nozzles 14, the present disclosure uses the third weld 133 and the fourth weld 143 to seal and fix the inlet nozzle 13 and the outlet nozzle 14 to the fixing block 12 respectively. This sealing method has a single structure, easy process quality control, and a low risk index of sealing failure. It can ensure sealing performance between the fixing block 12 and the inlet and outlet nozzles 14 during long-term use, and can also reduce assembly difficulty between the inlet and outlet nozzles 14 and the fixing block 12, improving assembly efficiency of the battery pack.

According to some embodiments of the present disclosure, an angle between one end of the first bent pipe 132 and other end of the first bent pipe 132 is β1, an angle between said one end of the second bent pipe 142 and said other end of the second bent pipe 142 is β2, and the following are respectively satisfied: 70°≤ β1 ≤ 110°, 70°≤ β2 ≤ 110°.

In some embodiments, the angle between one end of the first bent pipe 132 and the other end of the first bent pipe 132 is set as β1, and the angle between one end of the second bent pipe 142 and the other end of the second bent pipe 142 is set as β2, wherein β1 is set within a range of 70°≤ β1 ≤ 110°, and β2 is set within a range of 70°≤ β2 ≤ 110°.

When β1 and β2 are set within the above ranges, an internal space of the accommodating cavity occupied by the first bent pipe 132 and the second bent pipe 142 is small, and they do not interfere with other components received in the accommodating cavity, ensuring stability of the battery pack liquid cooling system during operation. At the same time, a plug-in temperature sensor 103 can be directly sleeved on outer peripheries of the first bent pipe 132 and the second bent pipe 142, without a need for additionally machining mounting holes on the first bent pipe 132 and the second bent pipe 142, which can reduce the manufacturing cost of the battery pack.

According to some embodiments of the present disclosure, a thickness of the fixing block 12 is h and satisfies: 3 mm ≤ h ≤ 5 mm.

In some embodiments, setting the thickness h of the fixing block 12 within a range of 3 mm ≤ h ≤ 5 mm can minimize the manufacturing material of the fixing block 12 while ensuring structural strength of the fixing block 12, so that the fixing block 12 can stably support the inlet nozzle 13 and the outlet nozzle 14, ensuring stability of the liquid cooling system during operation.

A battery pack according to the present disclosure is briefly described below.

The battery pack according to the present disclosure has the tray assembly 2100 according to any one of the above embodiments. Since the battery pack according to the present disclosure has the tray assembly 2100 according to any one of the above embodiments, the battery pack according to the present disclosure has better sealing performance, stronger stability and reliability, and a lower manufacturing cost.

An electric device according to the present disclosure is briefly described below.

The electric device according to the present disclosure has the battery pack according to any one of the above embodiments. Since the electric device according to the present disclosure has the battery pack according to any one of the above embodiments, the battery pack provided on the electric device according to the present disclosure has better sealing performance, stronger stability, a lower manufacturing cost, good safety and high reliability during vehicle operation, and also reduces the manufacturing cost of the electric device.

In the description of the present disclosure, it will be understood that terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" indicating orientations or positional relationships are based on orientations or positional relationships shown in the drawings. They are only for convenience of describing the present disclosure and simplifying the description, and do not indicate or imply that a device or element referred to must have a specific orientation, be constructed and operated in a specific orientation, and therefore cannot be construed as limiting the present disclosure.

In addition, the terms "first" and "second" are used for descriptive purposes only and will not be understood as indicating or implying relative importance or implicitly indicating a quantity of indicated technical features. Therefore, features defined with "first" and "second" may explicitly or implicitly include one or more of these features. In the description of the present disclosure, "plurality" means two or more, unless otherwise explicitly and specifically defined.

In the present disclosure, unless otherwise explicitly specified and defined, terms such as "mounted", "connected", "coupled", "fixed" will be understood in a broad sense. For example, it may be a fixed connection, a detachable connection, or an integral unit; it may be a mechanical connection or an electrical connection; it may be a direct connection or an indirect connection through an intermediate medium; it may be internal communication between two elements or an interaction relationship between two elements. For those of ordinary skill in the art, specific meanings of the above terms in the present disclosure will be understood according to specific circumstances.

In the present disclosure, unless otherwise explicitly specified and defined, a first feature being "on" or "under" a second feature may mean that the first feature and the second feature are in direct contact, or the first feature and the second feature are in indirect contact through an intermediate medium. Moreover, a first feature being "above", "over", and "on top of" a second feature may mean that the first feature is directly above or obliquely above the second feature, or merely indicates that a horizontal height of the first feature is greater than that of the second feature. A first feature being "below", "beneath", and "under" a second feature may mean that the first feature is directly below or obliquely below the second feature, or merely indicates that a horizontal height of the first feature is less than that of the second feature.

In the description of this specification, description with reference to terms such as "one embodiment", "some embodiments", "example", "specific example", or "some examples" means that a specific feature, structure, material, or characteristic described in connection with the embodiment or example is included in at least one embodiment or example of the present disclosure. In this specification, schematic representations of the above terms are not necessarily directed to the same embodiment or example. Furthermore, described specific features, structures, materials, or characteristics may be combined in any suitable manner in any one or more embodiments or examples. In addition, without mutual contradiction, those skilled in the art may combine and assemble different embodiments or examples and features of different embodiments or examples described in this specification.

Although the embodiments of the present disclosure have been shown and described above, it will be understood that the above embodiments are exemplary and will not be construed as limiting the present disclosure. Those of ordinary skill in the art may make changes, modifications, substitutions, and variations to the above embodiments within the scope of the present disclosure.

## Claims

1. A tray assembly, comprising:
a tray (201), the tray (201) having an accommodating cavity, and the accommodating cavity being used for accommodating a battery;
an explosion-proof valve (2), the explosion-proof valve (2) being arranged on the tray (201) and used for guiding high-temperature gas in the tray (201) to the outside; and
a cover body (3), the cover body (3) covering the explosion-proof valve (2), air holes (30) being formed in the cover body (3), and the air holes (30) being used for changing an exhaust direction, so as to enable the discharged high-temperature gas to clear the tray (201) and/or a safety device on a vehicle body.

2. The tray assembly according to claim 1, wherein the tray (201) has a first safety device, the first safety device is arranged adjacent to the explosion-proof valve, and the high-temperature gas discharged through the air holes (30) clears the first safety device.

3. The tray assembly according to claim 2, wherein the cover body (3) comprises:
a cover main body (31), the cover main body (31) having a cavity, an open end of the cavity facing the tray (201) side, and the air holes (30) being formed in the cover main body (31); and
a mounting portion (32), the mounting portion (32) being arranged at the open end of the cover main body (31) and used for connecting to the tray (201).

4. The tray assembly according to claim 3, wherein the cover main body (31) comprises:
a top wall (311); and
a side wall (312), the side wall (312) being arranged around the top wall (311) and extending from the top wall (311) toward the tray (201) side to form the cavity together with the top wall (311), and the air holes (30) being formed in the side wall (312).

5. The tray assembly according to claim 3, wherein the cover main body (31) is configured to be hemispherical, and the mounting portion (32) is arranged at an opening of the hemisphere.

6. The tray assembly according to claim 4 or 5, wherein the mounting portion (32) is arranged to fit against an outer wall surface of the tray (201); and
the tray assembly further comprises a connecting portion (33), the connecting portion (33) passing through the mounting portion (32) and being used for fixing the mounting portion (32) to the tray (201).

7. The tray assembly according to any one of claims 3 to 6, wherein the air holes (30) are formed in the side wall (312) of the cover main body (31) that faces away from the first safety device.

8. The tray assembly according to any one of claims 2 to 7, wherein the tray (201) has a mounting seat (4), the first safety device is mounted on the mounting seat (4), the mounting seat (4) is arranged adjacent to the explosion-proof valve (2), and the mounting seat (4) comprises:
a connecting plate (41), the connecting plate (41) being connected to the tray (201); and
a fixing seat (42), the fixing seat (42) being arranged on a side of the connecting plate (41) facing away from the tray (201) and having a fixing portion, the fixing portion being used for fixing the first safety device, and the first safety device being electrically connected to the battery.

9. The tray assembly according to any one of claims 1 to 8, wherein a peripheral wall of the explosion-proof valve (2) has a threaded portion (23), and the threaded portion (23) is threadedly connected to the tray (201).

10. A tray assembly, comprising:
a tray (201), the tray (201) having an accommodating cavity for accommodating a battery;
an inlet nozzle (13) and an outlet nozzle (14), the inlet nozzle (13) and the outlet nozzle (14) being respectively arranged on a side wall of the tray (201), a minimum distance between the inlet nozzle (13) and a bottom edge of the side wall being greater than or less than a minimum distance between the outlet nozzle (14) and the bottom edge of the side wall,
wherein a height of the tray (201) is H1, a distance in a height direction of the tray (201) between a center of the inlet nozzle (13) and a center of the outlet nozzle (14) is H2 and satisfies: 0 < H2/H1 ≤ 1/2.

11. The tray assembly according to claim 10, wherein H1 satisfies: H1 ≤ 100 mm, and 10 mm ≤ H2 ≤ 50 mm.

12. The tray assembly according to claim 10, wherein a minimum distance between the two nozzles is L1, a width of the side wall of the tray (201) is L2, and the following is satisfied: 14 ≤ L2/L1 ≤ 21.

13. The tray assembly according to claim 12, wherein L1 satisfies: 30 mm ≤ L1 ≤ 100 mm.

14. The tray assembly according to claim 12 or 13, wherein L2 satisfies: 400 mm ≤ L2 ≤ 1500 mm.

15. The tray assembly according to any one of claims 12-14, wherein a first connecting member and a second connecting member are arranged on the side wall of the tray (201), and the inlet nozzle (13) and the outlet nozzle (14) are located between the first connecting member and the second connecting member; wherein
a distance between the first connecting member and the second connecting member is L3, and the following is satisfied: 0.1 ≤ L1/L3 ≤ 0.9.

16. The tray assembly according to claim 15, wherein L3 satisfies: 50 mm ≤ L3 ≤ 1000 mm.

17. The tray assembly according to any one of claims 10 to 16, wherein the inlet nozzle (13) and the outlet nozzle (14) are configured as cylinders extending away from the side wall of the tray (201), and an angle between a line connecting an axis of the inlet nozzle (13) and an axis of the outlet nozzle (14) and a bottom surface of the tray (201) is α and satisfies: 0° < α ≤ 45°.

18. The tray assembly according to claim 17, wherein a minimum distance between the inlet nozzle (13) and the bottom surface of the tray (201) is greater than a minimum distance between the outlet nozzle (14) and the bottom surface of the tray (201).

19. The tray assembly according to claim 15, wherein a minimum distance between the inlet nozzle (13) and the first connecting member is less than a minimum distance between the inlet nozzle (13) and the second connecting member; and/or
a minimum distance between the outlet nozzle (14) and the first connecting member is greater than a minimum distance between the outlet nozzle (14) and the second connecting member.

20. The tray assembly according to claim 15, wherein one of the first connecting member and the second connecting member is configured as a lifting lug (101), and the other of the first connecting member and the second connecting member is configured as an electrical connection port (102); a minimum distance between the inlet nozzle (13) and the lifting lug (101) is d1, a minimum distance between the inlet nozzle (13) and the electrical connection port (102) is d2, and the following are satisfied: d1 ≥ 40 mm, d2 ≥ 40 mm.

21. The tray assembly according to any one of claims 10 to 20, wherein the tray (201) comprises:
a frame (11), the frame (11) being arranged around to define an accommodating cavity, one side of the frame (11) forms the side wall of the tray (201), and a fixing hole (111) extending through the side wall of the tray (201) being formed in the frame (11); and
a fixing block (12), the fixing block (12) being received in the fixing hole (111) and at least one end of the fixing block (12) being sealingly connected to the fixing hole (111), and the fixing block (12) having a first hole (121) and a second hole (122) for mating with the inlet nozzle (13) and the outlet nozzle (14), respectively.

22. The tray assembly according to claim 21, wherein the first hole (121) and the second hole (122) are configured as circular holes, and an angle between a line connecting a center of the first hole (121) and a center of the second hole (122) and the bottom surface of the tray (201) is α and satisfies: 0° < α ≤ 45°.

23. The tray assembly according to claim 21 or 22, wherein a cross-section of the fixing block (12) is configured to be oblong.

24. The tray assembly according to any one of claims 21 to 23, wherein an inner end of the fixing block (12) faces the accommodating cavity, a first weld is formed between an outer periphery of the inner end of the fixing block (12) and the fixing hole (111), and the first weld welds and seals the inner end of the fixing block (12) to an inner surface of the frame (11).

25. The tray assembly according to claim 24, wherein a first recess surrounding the outer periphery of the fixing block (12) is formed on the inner surface of the frame (11), and the first weld is arranged in the first recess.

26. The tray assembly according to claim 24, wherein an outer end of the fixing block (12) faces away from the accommodating cavity, a second weld (124) is formed between an outer periphery of the outer end of the fixing block (12) and the fixing hole (111), and the second weld (124) welds and seals the outer end of the fixing block (12) to an outer surface of the frame (11).

27. The tray assembly according to claim 26, wherein a cross-sectional area of the outer end of the fixing block (12) gradually decreases in a direction away from the tray (201), so as to form an inclined surface (123) on the outer periphery of the outer end of the fixing block (12), and the second weld (124) is located between the inclined surface (123) and an inner wall of the fixing hole (111).

28. The tray assembly according to any one of claims 21 to 27, wherein the inlet nozzle (13) comprises:
a first bent pipe (132), one end of the first bent pipe (132) being suitable for connecting to a liquid cooling plate (104); and
a first insert, the first insert being arranged at the other end of the first bent pipe (132), passing through the first hole (121), and being sealingly connected to the first hole (121); and
the outlet nozzle (14) comprises:
a second bent pipe (142), one end of the second bent pipe (142) being suitable for connecting to the liquid cooling plate (104); and
a second insert, the second insert being arranged at the other end of the second bent pipe (142), passing through the second hole (122), and being sealingly connected to the second hole (122).

29. The tray assembly according to claim 28, wherein a first mating protrusion extending in a radial direction is formed on an outer periphery of the first insert, the first mating protrusion mates with the first hole (121), a third weld (133) surrounding the outer periphery of the first mating protrusion is formed on the outer end of the fixing block (12), and the third weld (133) is suitable for sealing the first mating protrusion to the first hole (121); and
a second mating protrusion (144) extending in a radial direction is formed on an outer periphery of the second insert, the second mating protrusion (144) mates with the second hole (122), a fourth weld (143) surrounding the outer periphery of the second mating protrusion (144) is formed on the outer end of the fixing block (12), and the fourth weld (143) is suitable for sealing the second mating protrusion (144) to the second hole (122).

30. The tray assembly according to claim 29, wherein an angle between said one end of the first bent pipe (132) and said other end of the first bent pipe (132) is β1, an angle between said one end of the second bent pipe (142) and said other end of the second bent pipe (142) is β2, and the following are respectively satisfied: 70°≤ β1 ≤ 110°, 70°≤ β2 ≤ 110°.

31. The tray assembly according to claim 21, wherein a thickness of the fixing block (12) is h and satisfies: 3 mm ≤ h ≤ 5 mm.

32. A battery pack, comprising the tray assembly (2100) according to any one of claims 1 to 31.

33. An electric device, comprising the battery pack according to claim 32.

34. A vehicle, comprising:
a battery pack, the battery pack comprising the tray assembly according to any one of claims 1 to 9; and
a second safety device, the second safety device being mounted on a vehicle body and arranged adjacent to the battery pack, and an opening direction of the air holes (30) being suitable for clearing the second safety device.
